(19) **Europäisches Patentamt / European Patent Office / Office européen des brevets**

(11) **EP 2 887 054 B1**

(12) **EUROPÄISCHE PATENTSCHRIFT**

(45) Veröffentlichungstag und Bekanntmachung des Hinweises auf die Patenterteilung:
**22.02.2017 Patentblatt 2017/08**

(51) Int Cl.:
**G01N 21/64** *(2006.01)*    *G01N 21/77 (2006.01)*
**G01N 21/27** *(2006.01)*

(21) Anmeldenummer: **13198431.2**

(22) Anmeldetag: **19.12.2013**

(54) **Messverfahren für einen optochemischen Sensor**

Measurement method for an optochemical sensor

Procédé de mesure pour un capteur optochimique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**24.06.2015 Patentblatt 2015/26**

(73) Patentinhaber: **Mettler-Toledo GmbH**
**8606 Greifensee (CH)**

(72) Erfinder:
- **Venturini, Francesca**
  **8600 Dübendorf (CH)**
- **Vanoni, Claudio**
  **6612 Ascona (CH)**

(74) Vertreter: **Mettler-Toledo**
**IP Department**
**Im Langacher 44**
**8606 Greifensee (CH)**

(56) Entgegenhaltungen:
WO-A1-03/009763    WO-A1-2008/148703
WO-A1-2013/053381    US-A1- 2008 085 217
US-B1- 6 701 168

- **VALLEDOR M ET AL: "Luminescent ratiometric method in the frequency domain with dual phase-shift measurements: Application to oxygen sensing", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER S.A, CH, Bd. 117, Nr. 1, 12. September 2006 (2006-09-12), Seiten 266-273, XP027971523, ISSN: 0925-4005 [gefunden am 2006-09-12]**

**Beschreibung**

Die Erfindung bezieht sich auf ein Messverfahren für einen optochemischen Sensor, welches insbesondere dazu dient Alterungseffekte des Sensors zu kompensieren.

Optochemische Sensoren, welche auf einem Fluoreszenz-Prinzip beruhen, werden sowohl im Labor als auch in Prozessanlagen und Prozessumgebungen eingesetzt. Ein optochemischer Sensor weist dazu ein sensitives Element mit einem Fluoreszenzfarbstoff auf, welcher sensitiv für den gesuchten Parameter ist. Das sensitive Element kann beispielsweise eine Matrix aus einem polymeren oder keramischen Werkstoff umfassen, in der der Fluoreszenzfarbstoff gelöst, eingelagert oder immobilisiert ist. Derartige optochemische Sensoren können unter anderem zur Bestimmung von in einem Fluid gelösten Gasen dienen, wie zum Beispiel Sauerstoff oder Kohlendioxid. Der Begriff "Fluid" umfasst hier sowohl Flüssigkeiten, Gase sowie Mischungen daraus. Weiterhin können auch Parameter wie der pH-Wert oder die Temperatur mit geeigneten optochemischen Sensoren, welche auf einem Fluoreszenzprinzip beruhen, ermittelt werden.

Sauerstoff ($O_2$) kann in einem Messmedium beispielsweise mittels der Fluoreszenzlöschung ermittelt werden. Bei der Fluoreszenzlöschung werden die Moleküle des Fluoreszenzfarbstoffs durch Bestrahlung mit Licht einer geeigneten Wellenlänge angeregt. Die angeregten Moleküle geben dann bei der Rückkehr in den Grundzustand die aufgenommene Energie in Form von Fluoreszenzstrahlung wieder ab, welche durch Wechselwirkung mit einem Quencher im Messmedium, hier Sauerstoff, gelöscht wird. Für die Detektion der nach der Fluoreszenzlöschung verbleibenden Fluoreszenz ist es wichtig, dass diese eine ausreichende Intensität oder Energie aufweist, welche im Zusammenhang mit der eingestrahlten Strahlungsintensität steht.

Kohlendioxid ($CO_2$) kann ebenfalls in einem Messmedium mittels eines optochemischen Fluoreszenz-Sensors bestimmt werden. Wird Kohlendioxid in einem flüssigen Messmedium gelöst, so ändert sich der pH-Wert des Messmediums aufgrund der Bildung von Kohlensäure. Ein geeigneter, im sensitiven Element angeordneter Fluoreszenzfarbstoff reagiert auf diese pH-Änderung mit einer pH-abhängigen Änderung der Fluoreszenz, beispielsweise einer Wellenlängen-Verschiebung, welche nach Anregung des Fluoreszenzfarbstoffs mit Strahlung einer geeigneten Wellenlänge erfasst und so auf die im Messmedium vorliegende $CO_2$-Konzenztration zurückgeschlossen werden kann.

Als "Quencher" werden im Folgenden Moleküle oder Substanzen bezeichnet, welche die vom Fluoreszenzfarbstoff ausgesandte Fluoreszenz löschen können, wie beispielsweise Sauerstoff, oder welche dessen natürliche Fluoreszenz verändern, wie beispielsweise Kohlendioxid.

Weiterhin kann die Temperatur eines Mediums ermittelt werden, indem Temperatur-abhängige Fluoreszenzeffekte gemessen und ausgewertet werden.

Optochemische Sensoren, welche auf einem dieser Prinzipien beruhen, messen beispielsweise einen Phasenmesswert und/oder eine Phasenänderung aufgrund der Modulation der Intensität des Anregungslichts oder der Anregungsstrahlung. Der Phasenmesswert und/oder die Phasenänderung entstehen dadurch, dass der Fluoreszenzfarbstoff mit Strahlung der Anregungswellenlänge angeregt wird, wodurch eine Fluoreszenzantwort als Strahlung einer Wellenlänge erzeugt wird, die meist von der Anregungswellenlänge abweicht. Aufgrund des Prozesses der Fluoreszenzlöschung, der Fluoreszenzlebensdauer oder der Fluoreszenz-Abklingzeit ändert sich der Phasenwert der Fluoreszenzantwort. Der Gangunterschied zwischen den Signalen der Fluoreszenzantwort und der Strahlung der Anregungs-Strahlungsquelle oder einer identischen zweiten Strahlungsquelle, welche direkt auf den Detektor gelenkt wird, wird vom Detektor als Phasenmesswert oder Phasenwinkel erfasst.

Nachteilig an optochemischen Fluoreszenz-Sensoren ist, dass die Fluoreszenz des Fluoreszenzfarbstoffs in Abhängigkeit des Einsatzbereichs und der Umgebungsparameter des Sensors und insbesondere des sensitiven Elements im Laufe der Zeit nachlässt. Dieses zeigt sich darin, dass sich die Intensität der Fluoreszenz verringert und sich die Phase und/oder der Phasenmesswert ändert. Um das Nachlassen der Fluoreszenz und die damit verbundene Verschlechterung der Messergebnisse zu kompensieren, weisen nach diesen Methoden arbeitende optochemische Sensoren häufig austauschbare sensitive Elemente auf. Ein Austausch des sensitiven Elements stellt zwar die Funktionsfähigkeit des Sensors wieder her, allerdings kann der Austausch den Produktionsablauf empfindlich stören, insbesondere durch den verursachten Aufwand und mögliche Reaktions- oder Prozessunterbrechungen. Unterbrechungen zum Austausch des Sensors oder des sensitiven Elements können unter Umständen erhebliche Kosten verursachen und sich zudem aufwendig gestalten, vor allem, wenn der Sensor an einer weniger gut zugänglichen Stelle in der Prozessanlage angebracht ist. Werden optochemische Sensoren beispielsweise in einem Bagreaktor verwendet, wie er für gewisse biologischer oder biochemische Prozesse eingesetzt wird, so kann ein fehlerhaftes sensitives Element sogar einen vorzeitigen Abbruch des Prozesses verursachen.

Die Alterung des sensitiven Elements und des darin enthaltenen Fluoreszenzfarbstoffs beeinflusst den Zeitpunkt des Austauschs und zudem verschlechtert sich mit fortschreitender Einsatzdauer des sensitiven Elements auch die Messgenauigkeit. Die Alterung des sensitiven Elements kann somit zu einer Verfälschung des Messwerts führen, die höchstens unvollständig durch häufigeres Kalibrieren ausgeglichen werden kann.

Das Nachlassen der Fluoreszenz des Fluoreszenzfarbstoffs im sensitiven Element wird durch verschiedene Prozesse und Parameter beeinflusst, welche neben der Temperatur und den tatsächlichen Einsatz- oder Lagerungsbedingungen auch das Ausbleichen des Fluoreszenzfarbstoffs durch Umgebungslicht oder die zur Anregung eingesetzte Strahlung umfasst. Ganz allgemein handelt es sich dabei um verschiedene chemische und/oder physikalische Veränderungen des sensitiven Elements und insbesondere des Fluoreszenzfarbstoffs. Da die Alterungseffekte sehr unterschiedliche Ursachen haben, können sie experimentell durch Massnahmen wie zum Beispiel häufiges Kalibrieren nicht vollständig unterdrückt werden.

Experimentell konnte gezeigt werden, dass die Änderung der Fluoreszenz-Intensität, der Phase und/oder des Phasenmesswerts sowohl von den Prozessbedingungen wie auch vom Sensor beeinflusst wird. Zu den Prozessbedingungen zählen beispielsweise Temperatur und Druck, das Messmedium, die Quencher-Konzentration, die Art und Frequenz der verwendeten Reinigungsmethoden und/oder das Vorliegen und die Konzentration interferierender Stoffe. Der Einfluss des Sensors zeigt sich in der Geometrie des Sensors, beispielsweise der Anzahl und Dimensionen der eingesetzten Lichtleiter, sowie den Eigenschaften des sensitiven Elements und den Eigenschaften der eingesetzten Strahlungsquelle. Eine einfache Vorhersage des Einflusses dieser Effekte auf den Sensor und das sensitive Element ist aufgrund der Abhängigkeiten der einzelnen Effekte untereinander und des kaum vorhersagbaren Einflusses des Messmediums nicht möglich, so dass diese Effekte auch nicht direkt bzw. mit einer allgemein gültigen Formel beschrieben und/oder rechnerisch kompensiert werden können.

WO2008/148703 offenbart das Anregen des sensitiven Elements eines optochemischen Sensors bei zwei Modulationsfrequenzen, die Messung der jeweiligen Phasenmesswerte und die Lösung eines Gleichungssystems zur Ermittlung von Sauerstoff (Quencher) und Temperatur. Die Abhängigkeit der Phasenverschiebung von der Quencher-Konzentration und der Temperatur variiert bei verschiedenen Frequenzen, daher kann der Effekt der Temperatur mittels des Gleichungssystems kompensiert werden.

Verzögert werden kann die Alterung des sensitiven Elements zum Beispiel, indem eine möglichst geringe Strahlungsintensität zur Anregung verwendet wird und/oder das sensitive Element unter Lichtausschluss gelagert wird.

US 2010/0032583 A1 offenbart beispielsweise ein System, bei welchem die Position der einfallenden Strahlung auf dem sensitiven Element verändert und zudem die Intensität der einfallenden Strahlung angepasst werden kann, um einer punktuellen Überbeanspruchung sowie einem vorzeitiges Ausbleichen des sensitiven Elements vorzubeugen und so die Einsatzdauer desselben zu verlängern.

Solche Massnahmen verschieben jedoch nur den Zeitpunkt des Austauschs des sensitiven Elements und verzögern die Auswirkungen der Alterung, sie lassen es nicht zu, die Alterung oder die Alterungseffekte bei der Ermittlung des Messergebnisses zu berücksichtigen.

Als Aufgabe ergibt sich daher die Entwicklung eines Messverfahrens für einen optochemischen Sensor, welches es ermöglicht Alterungseffekte zu berücksichtigen und zu kompensieren, so dass auch gealterte Sensoren Messergebnisse mit einer hohen Genauigkeit und Reproduzierbarkeit liefern, vorzugsweise unabhängig von den Einsatzbedingungen des Sensors.

Gelöst wird diese Aufgabe durch ein Messverfahren für einen optochemischen Sensor, welcher zumindest eine Strahlungsquelle, welche Strahlung mit mindestens zwei Anregungs-Modulationsfrequenzen aussenden kann, einen Detektor, eine Steuer- und/oder Kontrolleinheit und ein sensitives Element mit einem Fluoreszenzfarbstoff umfasst. Das Verfahren umfasst folgende Schritte: Zunächst wird das sensitive Element mit einem Messmedium in Kontakt gebracht, welches einen Quencher enthält. Das sensitive Element wird dann durch von der Strahlungsquelle ausgesandte Strahlung einer ersten Anregungs-Modulationsfrequenz angeregt und es wird ein erster gealterter Phasenmesswert mit dem Detektor erfasst. Dieser Schritt wird für mindestens eine zweite und dritte Anregungs-Modulationsfrequenz unter Erfassung eines zweiten und dritten gealterten Phasenmesswerts mit dem Detektor wiederholt. Unter Berücksichtigung des ersten, mindestens eines zweiten und eines dritten gealterten Phasenmesswerts, wird dann eine alterungskompensierte Quencher-Konzentration mittels eines Systems von Stern-Volmer Gleichungen unter Berücksichtigung eines frequenz- und alterungsabhängigen Phasenbasiswerts und einer frequenz- und alterungsabhängigen Stern-Volmer-Konstante berechnet, wobei der gealterte Phasenbasiswert eine Funktion des Phasenbasiswerts eines neuwertigen Sensors und eines frequenzabhängigen Alterungsparameters ($A$) ist.

Als "Quencher" wird hier die zu analysierende Substanz bezeichnet, welche sich in einer unbekannten Konzentration im Messmedium befindet und welche die Fluoreszenz des Fluoreszenzfarbstoffs beeinflusst und/oder löscht. Der Begriff "gealterter Phasenmesswert" bezieht sich auf einen Phasenmesswert, welcher mit einem gealterten Sensor ermittelt wurde. Die Alterungseinflüsse können durch Anwendung dieses Verfahrens bei der Berechnung der alterungskompensierten Quencher-Konzentration berücksichtigt und weitestgehend kompensiert werden. Wird das Verfahren bei einem neuwertigen Sensor eingesetzt, so würde eine direkt aus einem Phasenmesswert ermittelte Quencher-Konzentration im Wesentlichen gleich der mit dem erfindungsgemässen Verfahren ermittelten alterungskompensierte Quencher-Konzentration sein.

Die Verwendung von zwei, drei oder mehr Anregungs-Modulationsfrequenzen zur Bestimmung der alterungskompensierten Quencher-Konzentration hängt vom zu vermessenden System ab, insbesondere von der Interaktionen oder Wechselwirkungen des Fluoreszenzfarbstoffs, der Matrix des sensitiven Elements in welcher der Fluoreszenzfarbstoff gelöst, eingelagert oder immobilisiert ist, des Quenchers und des Messmediums und deren Abhängigkeit von den Umgebungsparametern. Je komplexer diese Interaktionen und Abhängigkeiten sind, desto höher sollte die Zahl der ermittelten gealterte Phasenmesswerte bei den entsprechenden Anregungs-Modulationsfrequenzen sein, welche zur Berechnung der alterungskompensierte Quencher-Konzentration herangezogen werden.

Die Berechnung der alterungskompensierten Quencher-Konzentration erfolgt unter Berücksichtigung eines frequenz- und alterungsabhängigen Phasenbasiswerts und einer frequenz- und alterungsabhängigen Stern-Volmer-Konstante $K_{SV}(f,t)$, sowie des ersten, zweiten und/oder dritten gealterten Phasenmesswerts. Der Phasenbasiswert stellt dabei den Kalibrierwert für den Sensor in einem Messmedium ohne Quencher, im Falle eines Sauerstoffsensors zum Beispiel in reinem Stickstoff ($N_2$) als Messmedium, und der Phasenmesswert den Phasenwert in einem den Quencher enthaltenden Messmedium dar. Die Stern-Volmer Gleichung beschreibt den Zusammenhang zwischen dem Phasen-basiswert $\phi_0$, dem Phasenmesswert $\phi$ und der alterungskompensierte Quencher-Konzentration $[Q]$ in einem Messmedium unter Berücksichtigung der Stern-Volmer-Konstante $K_{SV}$:

$$\frac{\tan \phi_0}{\tan \phi} = 1 + K_{SV} \cdot [Q]$$

Wie noch näher erläutert wird, konnte festgestellt werden, dass sich sowohl der Phasenmesswert wie auch der Phasenbasiswert und die Stern-Volmer-Konstante als Funktion der Anregungs-Modulationsfrequenz und des Alters des Sensors, genauer des sensitiven Elements, verändern.

Vorzugsweise sind die erste, zweite und/oder dritte Anregungs-Modulationsfrequenz unterschiedlich voneinander, so dass bei der ersten, zweiten und/oder dritten Anregungs-Modulationsfrequenz voneinander abweichende Alterungseffekte bestimmt werden. Dieses ist vorteilhaft, da für einen gealterten Sensor in einem einzigen Messmedium mit einem Quencher mehrere gealterte Stern-Volmer-Gleichungen aufgestellt werden und zur Berechnung der alterungskompensierten Quencher-Konzentration herangezogen werden können.

Der gealterte Phasenbasiswert und die gealterte Stern-Volmer Gleichung hängen jeweils vom Phasenbasiswert $\phi_0$ bzw. der Stern-Volmer-Konstante $K_{SV}$ eines neuwertigen Sensors bei $t = 0$ ab.

Anhand von Untersuchungen an gealterten Sensoren konnte die Stern-Volmer Gleichung eines gealterten Sensors zum Zeitpunkt t bei einer Anregungs-Modulationsfrequenz $f_i$ wie folgt empirisch oder experimentell ermittelt und als Näherung aufgestellt werden:

$$\frac{\tan \phi_0(f_i, t)}{\tan \phi(f_i, t)} = 1 + K_{SV}(f_i, t) \cdot [Q]$$

mit

$$\phi_0(f_i, t) = \phi_0(f_i, t_0) \cdot e^{-A(f_i)t}$$

und

$$K_{SV}(f_i, t) = K_{SV}(f_i, t_0) \cdot e^{-B(f_i)t}$$

Ein frequenzabhängiger Phasenbasiswert $\phi_0(f_i, t_0)$ sowie auch ein frequenzabhängiger Basiswert der Stern-Volmer Konstante $K_{SV}(f_i, t_0)$ eines neuwertigen Sensors (mit $t_0$ gekennzeichnet) können im Rahmen der Grund- oder Basis-Kalibrierung eines neuwertigen Sensors ermittelt und im Sensor, im Transmitter und/oder der Steuer- und/oder Regeleinheit abgespeichert werden. $A$ beschreibt einen Alterungsfaktor des Phasenbasiswerts $\phi_0$ und $B$ einen weiteren Alterungsfaktor der Stern-Volmer Konstante $K_{SV}$. Diese beiden Alterungsfaktoren $A$, $B$ können empirisch ermittelt werden, wobei die mathematische Abhängigkeit dieser Faktoren in den vorangehend beschriebenen Formeln je nach Sensortyp leicht variieren kann und daher zumindest für jeden Sensortyp empirisch oder experimentell ermittelt werden sollte.

Die Alterungsfaktoren A, B können für eine Gruppe von Sensoren gleichen Typs, im Folgenden auch Sensortyp genannt, empirisch ermittelt und in der Steuer- und/oder Kontrolleinheit für die Bestimmung einer alterungskompensierten Quencher-Konzentration hinterlegt bzw. gespeichert werden. Die Alterungsfaktoren zeigen ebenfalls eine Frequenzabhängigkeit auf, wobei sich die Frequenzabhängigkeit der Alterungsfaktoren A, B für verschiedene Sensoren eines bestimmten Sensortyps nicht Wesentlich ändert, so dass A(f$_2$) und A(f$_3$) als Funktionen von A(f$_1$) und B(f$_2$) und B(f$_3$) als

Funktionen von B(f$_1$) dargestellt werden können. Die zuvor aufgestellten Formeln der gealterten Stern-Volmer-Gleichung wurden beispielhaft für einen Sensor des Typs InPRO 6970i von Mettler-Toledo ermittelt. Sie können analog auch für andere Sensortypen aufgestellt und zur Berechnung eines alterungskompensierten Messwerts herangezogen werden, wobei die mathematischen Abhängigkeiten der Faktoren und Parameter, insbesondere der Alterungsparameter A und B, für unterschiedliche Sensortypen variieren können.

Die Steuer- und/oder Kontrolleinheit des optochemischen Sensors umfasst zumindest ein Erfassungsmodul, ein Berechnungsmodul und ein Speichermodul, um den ersten, zweiten und/oder dritten gealterten Phasenmesswert zu erfassen und die alterungskompensierte Quencher-Konzentration zu berechnen.

Das Messverfahren eignet sich insbesondere zur Bestimmung einer Sauerstoff- oder Kohlendioxid-Konzentration im Messmedium als alterungskompensierte Quencher-Konzentration.

Der optochemische Sensor kann zudem eine weitere Strahlungsquelle umfassen deren Strahlung direkt auf den Detektor gelenkt wird und/oder ein Teil der Strahlung der Strahlungsquelle kann direkt auf den Detektor gelenkt werden, so dass der Gangunterschied zwischen den Signalen der Fluoreszenzantwort und der Strahlung der Anregungs-Strahlungsquelle oder der weiteren, vorzugsweise identischen zweiten Strahlungsquelle, vom Detektor als Phasenmesswert oder Phasenwinkel erfasst werden kann.

Das erfindungsgemässe Verfahren sowie verschiedene Ausführungsbeispiele eines optochemischen Sensors zur Durchführung des erfindungsgemässen Verfahrens werden im Folgenden anhand der Figuren näher beschrieben, wobei gleiche Elemente mit gleichen oder ähnlichen Bezugszeichen versehen sind. Die Figuren zeigen:

Fig. 1    Phasenmesswert-Konzentrations-Diagramm, welches die Frequenzabhängigkeit des Phasenmesswerts für einen optochemischen Sauerstoffsensor des Typs InPro6970i zeigt;

Fig. 2    Phasenbasiswert-Konzentrations-Diagramm für einen neuwertigen und einen gealterten Sauerstoffsensor des Typs InPro6970i;

Fig. 3    Diagramm des Fehlers der Sauerstoffmessung als Funktion der tatsächlichen Sauerstoffkonzentration für einen gealterten Sauerstoffsensor des Typs InPro6970i;

Fig. 4    Diagramm der Phasenänderung als Funktion der Anregung-Modulationsfrequenz, welches die Abhängigkeit des Phasenbasiswerts von der Anregungs-Modulationsfrequenz für einen gealterten Sauerstoffsensor des Typs InPro6970i zeigt;

Fig. 5    eine schematische Darstellung eines optochemischen Sensors mit einem sensitiven Element;

Fig. 6    eine schematische Darstellung eines weiteren optochemischen Sensors mit einem sensitiven Element;

Fig. 7    eine schematische Darstellung eines weiteren optochemischen Sensors mit einem sensitiven Element.

Das erfindungsgemässe Messverfahren wird im Folgenden anhand eines optochemischen Sensors, welcher insbesondere für die Messung von Sauerstoff ($O_2$) geeignet ist, näher erläutert. Vergleichbare Berechnungen und Überlegungen können auch für einen optochemischen Kohlendioxid-Sensor und/oder einen Sensor zur Bestimmung des pH-Werts oder der Temperatur angestellt werden.

Optochemische Sensoren, welche auf einem Fluoreszenz-Prinzipien beruhen, messen beispielsweise einen Phasenmesswert und/oder eine Phasenänderung aufgrund der Modulation der Intensität des Anregungslichts oder der Anregungsstrahlung. Der Phasenmesswert und/oder die Phasenänderung entstehen dadurch, dass der Fluoreszenzfarbstoff mit Strahlung der Anregungswellenlänge angeregt wird, wodurch eine Fluoreszenzantwort als Strahlung einer Wellenlänge erzeugt wird, die meist von der Anregungswellenlänge abweicht. Aufgrund des Prozesses der Fluoreszenzlöschung, der Fluoreszenzlebensdauer oder der Fluoreszenz-Abklingzeit ändert sich der Phasenwert. Der Gangunterschied zwischen den Signalen der Fluoreszenzantwort und der Strahlung der Anregungs-Strahlungsquelle oder einer identischen zweiten Strahlungsquelle, welche direkt auf den Detektor gelenkt wird, kann dann vom Detektor als Phasenmesswert oder Phasenwinkel erfasst werden.

Die alterungskompensierte Quencher-Konzentration in einem Messmedium, im Folgenden auch als Quencher-Konzentration [Q] bezeichnet, in diesem Beispiel die Sauerstoffkonzentration, wird für einen optochemischen Sensor, welcher nach einem Fluoreszenz-Prinzip arbeitet, mittels der bekannten Stern-Volmer Gleichung berechnet:

$$\frac{\tan \phi_0}{\tan \phi} = 1 + K_{SV} \cdot [Q]$$

Die Quencher-Konzentration [Q] kann aus der Phasenverschiebung eines Phasenbasiswerts $\phi_0$ ohne Fluoreszenzlöschung und eines Phasenmesswerts $\phi$ nach Fluoreszenzlöschung durch den im Messmedium vorliegenden Quencher unter Berücksichtigung der Stern-Volmer Konstante $K_{SV}$ berechnet werden. Der Phasenbasiswert $\phi_0$ stellt dabei den Kalibrierwert für den Sensor in einem Messmedium ohne Quencher, im Falle eines Sauerstoffsensors zum Beispiel in reinem Stickstoff $N_2$, und der Phasenmesswert $\phi$ den Messwert in einem den Quencher in der Konzentration [Q]

enthaltetenden Messmediums dar.

Sowohl der gemessene Phasenmesswert $\phi$, wie auch die Stern-Volmer Konstante $K_{SV}$ und der Phasenbasiswert $\phi_0$ sind bei jeder beliebigen Quencherkonzentration [Q] abhängig von der Modulationsfrequenz $f$ der zur Fluoreszenzanregung verwendeten Strahlung, woraus sich folgender Zusammenhang ergibt:

$$\frac{\tan\phi_0(f)}{\tan\phi(f)} = 1 + K_{SV}(f) \cdot [Q]$$

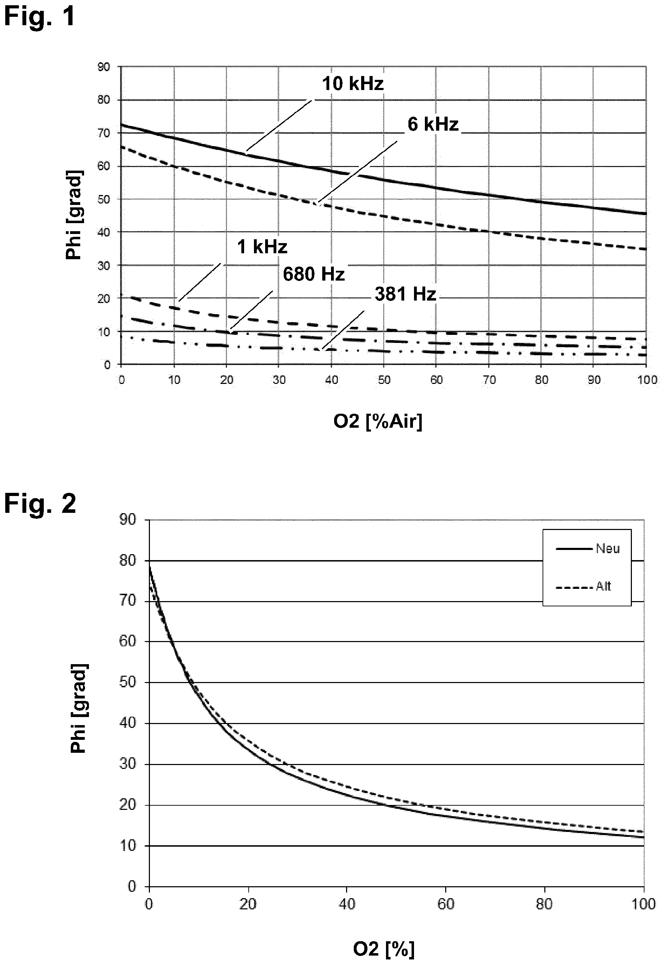

Diese Abhängigkeit ist in Figur 1 für einen Sauerstoffsensor des Typs InPro6970i von Mettler-Toledo bei verschiedenen Modulationsfrequenzen f zwischen 381 Hz und 10 kHz gezeigt, welcher mit einer Wellenlänge von 515 nm (Nanometer) angeregt wurde. Das Diagramm zeigt die Auftragung des Phasenmesswerts $\phi$ in [°] (Phi [grad]) gegen die Sauerstoffkonzentration in Luft $O_2$ [% *Air*]. Die Messungen wurden mit einem InPR06970i Sensor der Firma Mettler-Toledo bei Raumtemperatur aufgenommen.

Weithin konnte experimentell beobachtet werden, dass die Alterung eines sensitiven Elements einen Einfluss sowohl auf den Phasenbasiswert $\phi_0(f,t)$ als auch auf die Stern-Volmer Konstante $K_{SV}(f,t)$ hat. Sowohl der Phasenbasiswert, als auch die Stern-Volmer Konstante hängen also nicht nur von der Frequenz $f$ sondern auch von der Alterung bzw. der Zeit $t$ ab. Daraus kann abgeleitet werden, dass sich für einen gealterten Sensor auch der Phasenmesswert $\phi(f,t)$, welcher die Fluoreszenzlöschung oder das Fluoreszenzquenchen berücksichtigt, bei einer vorgegebenen Quencher-Konzentration im Vergleich zu einem neuwertigen Sensor ändert.

Werte, Parameter und Konstanten welche sich auf einen gealterten Sensor beziehen und/oder mit einem gealterten Sensor ermittelt wurden, werden im Folgenden als "gealterte Werte" oder "Alterungswerte" bezeichnet, wie beispielsweise eine gealterte Stern-Volmer Konstante, ein gealterter Phasenmesswert oder ein gealterter Phasenbasiswert.

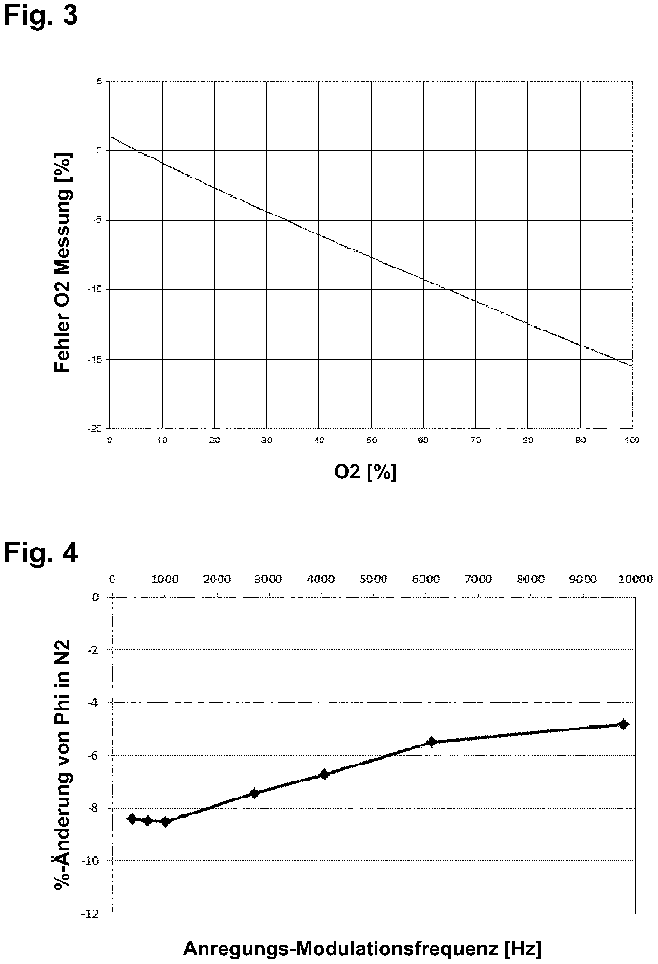

Figur 2 zeigt eine Auftragung der Sauerstoffkonzentration $O_2$ [%] gegen den Phasenmesswert $\phi$ in [°] (Phi [grad]) für einen neuwertigen Sensor (neu) und einen gealterten Sensor (alt). Die Messungen wurden mit einem Sensor des Typs InPro6970i bei einer Anregungswellenlänge von 515 nm bei Raumtemperatur durchgeführt. Der gealterte Sensor ist ein Sensor, welcher zur Alterung etwa 20 Tage bei ca. 60°C eingesetzt wurde. Die als durchgezogener Linie dargestellte Kurve zeigt die Messungen an einem neuwertigen Sensor und die gebrochen dargestellte Kurve die Messungen an einem gealterten Sensor. Die beiden Kurven schneiden sich bei einer Sauerstoffkonzentration von ca. 5 %AIR, wobei 100 %AIR einer Sauerstoffkonzentration von 20.95 %$O_2$ entsprechen. Nur für diese Konzentration von ca. 5 %AIR zeigen der neuwertige und der gealterte Sensor die gleiche Sauerstoffkonzentration an. Bei allen anderen Sauerstoffkonzentrationen weicht das Ergebnis des gealterten Sensors von dem des neuwertigen Sensors ab. Der Fehler kann für einen gealterten Sensor mehrere Prozent betragen, wie es in Figur 3 gezeigt ist.

Figur 3 zeigt den Fehler der Sauerstoffmessung in Prozent als Funktion der tatsächlichen Sauerstoffkonzentration in Prozent für einen gealterten Sauerstoffsensor des Typs InPro6970i, welcher vier Wochen lang bei einer Temperatur von ca. 60°C an Luft eingesetzt wurde. Wie man sehen kann nimmt der Fehler bei zunehmender Sauerstoffkonzentration stark zu. Die Messergebnisse eines gealterten Sensors weichen je nach Grösse der tatsächlichen Sauerstoffkonzentration um mehrere Prozent vom tatsächlichen Wert ab.

Die Alterung eines optochemischen Sensors mit einem sensitiven Element, welches einen Fluoreszenzfarbstoff enthält, wird durch verschiedene Effekte hervorgerufen, welche unter anderem die eingesetzte Strahlungsintensität und die Einsatzbedingungen, wie Temperatur, chemische Zusammensetzung des Messmediums und weitere Parameter umfassen. Da die Alterung nicht ausschliesslich ein optischer Effekt ist, ist es nicht möglich die Alterungseffekte des Sensors beispielsweise durch den Einsatz optischer Filter zu eliminieren.

Jedoch konnte beobachtet werden, dass der gealterte Phasenbasiswert $\phi_0(f,t)$ bei einer bestimmten Anregungs-Modulationsfrequenz $f_i$ charakteristisch für das jeweilige sensitive Element und dessen Alterungszustand ist, wobei der Sensor unter anderem durch die Matrix des sensitiven Elements, den eingesetzten Fluoreszenzfarbstoff, die zur Immobilisierung des Fluoreszenzfarbstoff in der Matrix verwendeten Methode und/oder sein Alter charakterisiert ist. Wie im Folgenden erläutert wird, können gealterte Phasenbasiswerte $\phi_0(f_i,t)$, welche mit einem gealterten Sensor bei unterschiedlichen Anregungs-Modulationsfrequenzen $f_i$ ermittelt werden, zur Kompensation der Alterung herangezogen werden. Dieses ist möglich, da experimentell gezeigt werden konnte, dass die Alterung bei verschiedenen Anregungs-Modulationsfrequenzen $f_i$ den gealterten Phasenbasiswert $\phi_0(f_i,t)$ unterschiedlich beeinflusst.

Figur 4 zeigt die Frequenzabhängigkeit der Phasenänderung für einen gealterten Sensor des Typs InPR06970i, welcher vier Wochen lang bei einer Temperatur von ca. 60°C an Luft eingesetzt wurde. Gezeigt ist die prozentuale Änderung des Phasenbasiswerts $\phi_0$, welcher über eine Messung in reinem Stickstoff $N_2$ (% Änderung von Phi in $N_2$) in Abhängigkeit der Anregungs-Modulationsfrequenz $f$ [Hz] ermittelt wurde. Die Messungen wurden wiederum mit einer Anregungswellenlänge von 515 nm durchgeführt. Aus Figur 4 wird ersichtlich, dass die Änderung des Phasenbasiswerts $\phi_0$ nicht einheitlich für verschiedene Modulationsfrequenzen $f_i$ ist, sondern voneinander abweichende Werte aufweisen.

Die frequenzabhängige Phasenänderung eines neuwertigen Sensors $\phi_0(f,t_0)$ gleichen Sensortyps entspräche im Wesentlichen einer Nulllinie in der gezeigten Darstellung. Die Alterung des Phasenbasiswerts $\phi_0(f,t)$ und der Stern-Volmer Konstante $K_{SV}(f,t)$ kann wie folgt als Exponentialfunktion ausgedrückt werden:

$$\phi_0(f,t) = \phi_0(f,t_0) \cdot e^{-A(f)t}$$

und

$$K_{SV}(f,t) = K_{SV}(f,t_0) \cdot e^{-B(f)t}$$

Wobei t die Betriebsdauer oder Einsatzdauer des Sensors angibt und $t_0$ jeweils den Wert eines neuwertigen Sensors bezeichnet. $A, B$ sind Alterungsfaktoren des Phasenbasiswerts $\phi_0$ bzw. der Stern-Volmer Konstante $K_{SV}$, welche empirisch bzw. experimentell bestimmt werden können. Die Alterungsfaktoren $A, B$ sind spezifisch für jeden Sensortyp und können bereits werkseitig experimentell bestimmt und beispielsweise in einem internen Speicher eines Sensors hinterlegt und/oder über eine Datenbank mit der Seriennummer des Sensors verknüpft werden, so dass diese von einer externen Steuer- und/oder Regeleinheit, wie zum Beispiel einem Transmitter, abgerufen und für die Bestimmung eines alterungskompensierten Messwerts herangezogen werden kann. Zur Bestimmung der Alterungsfaktoren $A, B$ werden anhand der Ergebnisse mehrerer Messreihen die Abhängigkeiten der Anregungs-Modulationsfrequenz, der Alterung, der Quencher-Konzentration sowie der Temperatur in Bezug auf den vorliegenden Sensortyp ermittelt und die Alterungsfaktoren $A, B$ als empirische Approximation der gemittelten frequenzabhängigen Alterung bestimmt. Auf diese Weise können eine Art von Masterkurven für die beiden Alterungsfaktoren $A, B$ erstellt werden, welche für die Ermittlung der tatsächlichen oder alterungskompensierten Quencher-Konzentration mit einem gealterten sensitiven Element herangezogen werden.

Aufgrund der vorangehend beschriebenen Überlegungen kann die Alterung eines nach dem Prinzip der Fluoreszenzlöschung arbeitenden optochemischen Sensors, wie im Folgenden beispielhaft für einen Sauerstoffsensor gezeigt, kompensiert werden.

In Kenntnis der in Figur 4 gezeigten Kurve werden für einen gealterten Sauerstoffsensor desselben Typs mindestens drei Anregungs-Modulationsfrequenzen $f_i$ mit $i$ = 1,2,3,... ausgewählt, an denen die alterungsbedingten Änderungen des Phasenbasiswerts $\phi_0(f,t)$ signifikant sind. Für einen Sauerstoffsensor des Typs InPR06970i wurden anhand von Figur 4 folgende Anregungs-Modulationsfrequenzen ausgewählt: $f_1$ = 10kHz, $f_2$ = 6kHz und $f_3$ = 1kHz. Mit einem gealterten Sensor wurde jeweils mindestens ein gealterter Phasenmesswert $\phi(f_i,t)$ pro Anregungs-Modulationsfrequenz $f_i$ ermittelt.

Die Stern-Volmer Gleichung des gealterten Sensors zum Zeitpunkt t bei der Anregungs-Modulationsfrequenz $f_i$ kann wie folgt formuliert werden:

$$\frac{\tan \phi_0(f_i,t)}{\tan \phi(f_i,t)} = 1 + K_{SV}(f_i,t) \cdot [Q]$$

mit

$$\phi_0(f_i,t) = \phi_0(f_i,t_0) \cdot e^{-A(f_i)t}$$

und

$$K_{SV}(f_i,t) = K_{SV}(f_i,t_0) \cdot e^{-B(f_i)t}$$

Der frequenzabhängige Phasenbasiswert $\phi_0(f_i,t_0)$ sowie auch der frequenzabhängige Basiswert der Stern-Volmer Konstante $K_{SV}(f_i,t_0)$ des neuwertigen Sensors können im Rahmen der Grund- oder Basis-Kalibrierung des neuwertigen Sensors ermittelt und im Sensor, im Transmitter und/oder der Steuer- und/oder Regeleinheit abgespeichert werden. Der gealterte Phasenbasiswert $\phi_0(f_i,t)$ sowie die gealterte Stern-Volmer Konstante $K_{SV}(f_i,t)$ können wie vorangehend erläutert ermittelt werden, wobei $A(f_2)$ und $A(f_3)$ als Funktion von $A(f_1)$ sowie $B(f_2)$ und $B(f_3)$ als Funktion von $B(f_1)$ dargestellt werden können.

Messungen mit einem gealterten Sensor im gleichen Messmedium, also bei gleicher Sauerstoffkonzentration, und bei mindestens drei unterschiedlichen Anregungs-Modulationsfrequenzen führen somit zu drei gealterten Stern-Volmer Gleichungen für $f_i$ mit $i$ = 1, 2, 3:

$$\frac{\tan\left(\phi_o(f_i, t_0)e^{-A(f_i)t}\right)}{\tan\phi(f_1, t)} = 1 + K_{SV}(f_1, t_0)e^{-B(f_i)t} \cdot [Q]$$

Um aus diesen frequenzabhängigen Gleichungen die alterungskompensierte Quencher-Konzentration [Q], in diesem Fall die Sauerstoffkonzentration, berechnen zu können, wird zumindest einer der frequenzabhängigen Alterungsparameter $A(f_i)$, $B(f_i)$ empirisch bestimmt.

Für den beschriebenen Fall mit drei Anregungs-Modulationsfrequenzen $f_1$, $f_2$, $f_3$ erhält man an jedem Zeitpunkt drei gealterte Stern-Volmer Gleichungen:

$$\frac{\tan(\phi_0(f_1, t_0)e^{-A(f_1)t}}{\tan\phi(f_1, t)} = 1 + K_{SV}(f_1, t_0)e^{-B(f_1)t} \cdot [Q]$$

$$\frac{\tan(\phi_0(f_2, t_0)e^{-A(f_2)t}}{\tan\phi(f_2, t)} = 1 + K_{SV}(f_2, t_0)e^{-B(f_2)t} \cdot [Q]$$

$$\frac{\tan(\phi_0(f_3, t_0)e^{-A(f_3)t}}{\tan\phi(f_3, t)} = 1 + K_{SV}(f_3, t_0)e^{-B(f_3)t} \cdot [Q]$$

Aus diesen Gleichungen kann unter Kenntnis des frequenzabhängigen Verhaltens der ermittelten Alterungsparameter $A(f_i)$ und $B(f_i)$ die alterungskompensierte Quencher-Konzentration [Q], hier die Sauerstoffkonzentration bestimmt werden. Methoden zur numerischen Auflösung derartiger Gleichungssystemen sind hinlänglich bekannt und werden hier daher nicht im Detail ausgeführt. Eine mögliche Methode zur numerischen Auflösung dieses Gleichungssystems stellt beispielsweise das Newton-Raphson-Verfahren dar.

Die Alterungsparameter $A(f_i)$, $B(f_i)$ ändern sich, wie vorangehend gezeigt für die Sensoren eines Sensortyps im Laufe der Zeit nicht wesentlich, so dass es zumindest für die Sensoren eines bestimmten Sensortyps beim Einsatz in einer vergleichbaren Umgebung oder einer vergleichbaren Anwendung die ermittelten Alterungsparameter $A(f_i)$, $B(f_i)$ elektronisch hinterlegt werden können und für weitere Berechnungen einer alterungskompensierten Quencher-Konzentration mit weiteren Sensor dieses Sensortyps herangezogen werden können.

Für den vorliegenden Sensortyp wurde der frequenzabhängige Alterungsparameter $A(f_i)$ für folgende Anregungs-Modulationsfrequenzen empirisch ermittelt: $f_1$ = 9.8 kHz, $f_2$ = 6.1 kHz, $f_3$ = 1.0 kHz, $f_4$ = 4.1 kHz und $f_5$ = 2.7 kHz. Wie man der Tabelle entnehmen kann ist das Verhältnis der frequenzabhängigen Alterungsparameter für Sensoren desselben Sensortyps im Wesentlichen gleich. Die frequenzabhängigen Alterungsparameter für den hier verwendeten Sensortyp können daher als Mittelwert der in Tabelle 1 gezeigten Werte dargestellt werden. Die mindestens drei Frequenzen, welche für das erfindungsgemässe Verfahren benötigt werden, können in diesem Beispiel wie folgt ausgewählt werden: $f_1$ = 9.8 kHz, $f_2$ = 6.1 kHz, $f_3$ = 1.0 kHz. Diese Frequenzen wurden ausgewählt, um möglichst unterschiedliche Frequenzabhängigkeiten des Alterungsparameters $A(f_i)$ berücksichtigen zu können. Die frequenzabhängigen Alterungsparameter können wie folgt als Funktion des Alterungsparameters des ersten Anregungs-Modulationsfrequenz dargestellt werden: $A(f_2)$ = 1.2·$A(f_1)$ und $A(f_3)$ = 1.8· $A(f_1)$.

| $f_i$[Hz] | $A(f_i)/A(f_1)$; $f_1$ = 9.8 kHz | | | | |
| --- | --- | --- | --- | --- | --- |
| | Sensor 1 | Sensor 2 | Sensor 3 | Sensor 4 | Mittelwert |
| $f_2$: 6.1E+03 | 1.1 | 1.2 | 1.2 | 1.2 | 1.2 |
| $f_3$: 1.0E+03 | 1.8 | 1.9 | 1.6 | 1.8 | 1.8 |
| $f_4$: 4.1E+03 | 1.4 | 1.4 | 1.4 | 1.4 | 1.4 |
| $f_5$: 2.7E+03 | 1.5 | 1.6 | 1.5 | 1.6 | 1.6 |

Der frequenzabhängige Alterungsparameter $B$ kann ebenfalls empirisch bestimmt werden.

**EP 2 887 054 B1**

Das erfindungsgemässe Verfahren wurde vorangehend beispielhaft für einen Sauerstoffsensor beschrieben. Vergleichbare Berechnungen und Überlegungen können auch für andere mit einem optochemischen Sensor bestimmbare Parameter gemacht werden, wie beispielsweise die Kohlendioxid-Konzentration, den pH-Wert und/oder die Temperatur.

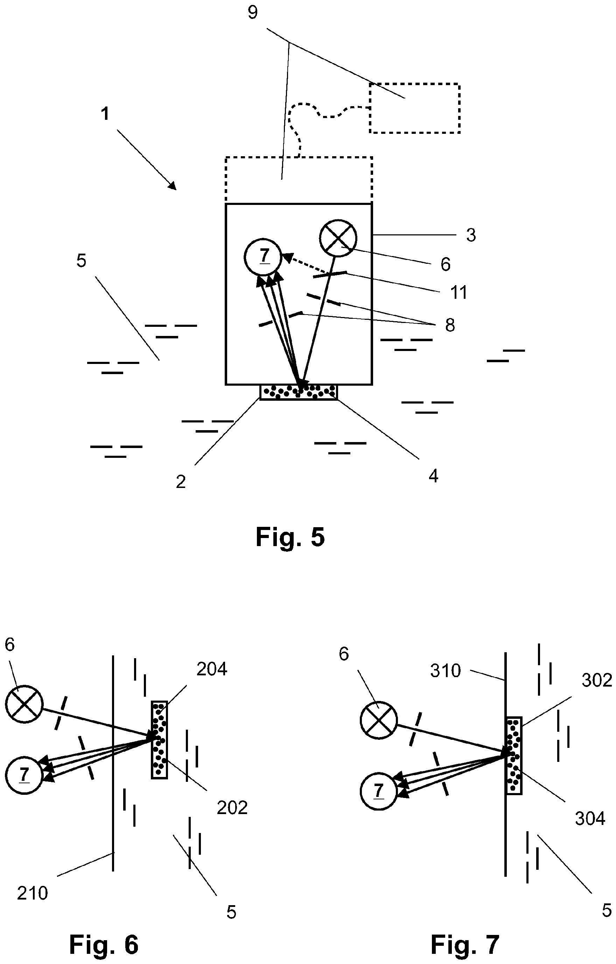

Figuren 5 bis 7 zeigen verschiedene Ausgestaltungen eines optochemischen Sensors zur Durchführung des vorangehend beschriebenen Verfahrens.

Figur 5 zeigt einen optochemischen Sensor 1, welcher ein sensitives Element 2 mit einem Fluoreszenzfarbstoff 4 aufweist. Das sensitive Element 2 ist lösbar mit einem Sensorgehäuse 3 verbunden, so dass das sensitive Element 2 leicht ausgetauscht werden kann, wenn dieses und/oder der Fluoreszenzfarbstoff 4 verbraucht oder gealtert ist. Dazu kann das sensitive Element 2 in einem Halter und/oder einem mit dem Sensorgehäuse 3 lösbar verbundenem Aufsatz angeordnet sein. Das sensitive Element 2 steht im Betrieb, wie hier angedeutet, mit dem Messmedium 5 in direktem Kontakt. Das sensitive Element 2 kann beispielsweise eine Matrix aus einem polymeren oder keramischen Werkstoff sein, in der der Fluoreszenzfarbstoff 4 gelöst oder eingelagert ist.

Im Inneren des Sensorgehäuses 3 sind eine Strahlungsquelle 6 und ein Detektor 7 angeordnet. Die von der Strahlungsquelle 6 ausgesandte Strahlung wird durch geeignete, hier nur angedeutete optische Elemente 8, wie Filter, Spiegel, Blenden oder Linsen, auf und/oder in das sensitive Element 8 gelenkt, wo diese mit dem Fluoreszenzfarbstoff 4 wechselwirken kann. Die Strahlungsquelle 6 kann Strahlung verschiedener Frequenzen oder Anregungs-Modulationsfrequenzen aussehen. Dazu ist die Strahlungsquelle 6 beispielsweise modulierbar oder umfasst mehrere Strahlungselemente, welche jeweils Strahlung mindestens einer Frequenz aussenden können. Die Fluoreszenzantwort für die jeweilige Frequenz wird anschliessend vom Detektor 7 detektiert.

Ferner kann wie hier gezeigt im Strahlengang ein Strahlenteiler 11 angeordnet sein, welcher einen Teil der Anregungsstrahlung direkt zum Detektor leitet, so dass ein Gangunterschied oder die Phase zwischen diesem Strahl und der vom Fluoreszenzfarbstoff ausgehenden Fluoreszenz erfasst werden kann. Alternativ kann der Sensor eine weitere Strahlenquelle mit im Wesentlichen identischen Eigenschaften umfassen, welche Strahlung unter Verwendung eines weiteren Strahlengangs zum Detektor leitet.

Zur Ansteuerung und Verarbeitung der aufgefangenen Signale weist der Sensor 1 noch eine Steuer- und/oder Regeleinheit 9 auf, welche sowohl als externe Einheit oder auch ganz oder teilweise im Sensorgehäuse 3 angeordnet sein kann. Die Steuer- und/oder Regeleinheit 9 kann drahtgebunden oder drahtlos mit dem optochemischen Sensor 1 verbunden sein. Verschiedene Varianten der Steuer- und/oder Regeleinheit sind bekannt und daher hier nur angedeutet.

Figur 6 zeigt eine stark vereinfachte Darstellung einer weiteren Ausgestaltung eines optochemischen Sensors mit einem sensitiven Element 202, welches einen Fluoreszenzfarbstoff 204 enthält. Das sensitiven Element 202 ist hier direkt im Messmedium 5 angeordnet und wird durch einen Wandabschnitt 210 eines Behältnisses mit Strahlung einer Strahlungsquelle 6 beaufschlagt. Die Detektion der Fluoreszenzantwort erfolgt ebenfalls durch den Wandabschnitt 210 mit einem ausserhalb des Behältnisses angeordnetem Detektor 7. Die Detektion könnte auch durch einen anderen Wandabschnitt erfolgen, welches beispielsweise dem Wandabschnitt 210 gegenüber liegt. Der Wandabschnitt 210 kann entweder ein Fenster aufweisen oder aus einem Material bestehen, welches sowohl für die eingesetzte Strahlung als auch für die detektierte Strahlung durchlässig und/oder optisch transparent ist.

Eine weitere Ausgestaltung eines optochemischen Sensors ist, wiederum stark vereinfacht, in Figur 7 gezeigt. Hier ist ein sensitives Element 302 mit einem Fluoreszenzfarbstoff 304 an der Innenseite eines Wandabschnitts 310 befestigt und wird durch den Wandabschnitt 310 hindurch mit Strahlung einer Strahlungsquelle 6 beaufschlagt. Ebenso wird die Fluoreszenzantwort durch das Wandabschnitt 310 hindurch mit einem Detektor 7 detektiert. Der Wandabschnitt 310 ist somit sowohl für die eingestrahlte Strahlung als auch für die detektierte Strahlung optisch transparent oder durchlässig. Das sensitive Element 302 steht in direktem Kontakt mit einem Messmedium 5. Die Ausgestaltung gemäss Figur 7 kann beispielsweise in einem Bagreaktor realisiert werden, dessen Wand aus einem polymeren Material besteht. Das sensitive Element kann beispielsweise durch Kleben, Verschweissen oder andere bekannte, für die vorliegenden Materialien geeignete Methoden mit dem Wandabschnitt verbunden werden.

Obwohl die Erfindung durch die Darstellung spezifischer Ausführungsbeispiele beschrieben worden ist, ist es offensichtlich, dass zahlreiche weitere Ausführungsvarianten in Kenntnis der vorliegenden Erfindung geschaffen werden können, beispielsweise indem die Merkmale der einzelnen Ausführungsbeispiele miteinander kombiniert und/oder einzelne Funktionseinheiten der Ausführungsbeispiele ausgetauscht werden. Insbesondere kann das Verfahren für weitere Quencher durchgeführt werden, welche mit einem nach einem vergleichbaren Fluoreszenzverfahren arbeitenden optochemischen Sensor gemessen werden können.

**Liste der Bezugszeichen**

1          Sensor

| 2, 202, 302 | Sensitives Element |
| 3 | Gehäuse |
| 4, 204, 304 | Fluoreszenzfarbstoff |
| 5 | Messmedium |
| 6 | Strahlungsquelle |
| 7 | Detektor |
| 8 | Optisches Element |
| 9 | Steuer- und/oder Kontrolleinheit |
| 11 | Strahlteiler |
| 210,310 | Wandabschnitt |
| $\phi_0$ | Phasenbasiswert |
| $\phi$ | Phasenmesswert |
| $K_{SV}$ | Stern-Volmer-Konstante |
| $f$ | Anregungs-Modulationsfrequenz |
| $t$ | Zeitpunkt (Alterung) |
| $A$ | Alterungsparameter |
| $B$ | weiterer Alterungsparameter |
| $[Q]$ | Quencher-Konzentration |

**Patentansprüche**

1. Messverfahren für einen optochemischen Sensor (1),
   welcher optochemische Sensor (1) eine Strahlungsquelle (6), welche Strahlung mit mindestens zwei Anregungs-Modulationsfrequenzen ($v_i$) aussenden kann, einen Detektor (7), eine Steuer- und/oder Kontrolleinheit (9) und ein sensitives Element (2, 202, 302) mit einem Fluoreszenzfarbstoff (4, 204, 304) umfasst;
   wobei das Verfahren die folgenden Schritte umfasst:

   a. In Kontaktbringen des sensitiven Elements (2, 202, 302) mit einem Messmedium, welches einen Quencher enthält;
   b. Anregen des sensitiven Elements (2, 202, 302) durch von der Strahlungsquelle (6) ausgesandte Strahlung

   i. einer ersten Anregungs-Modulationsfrequenz ($f_1$) und Erfassen eines ersten gealterten Phasenmesswerts ($\phi(f_1,t)$) mit dem Detektor (7),
   ii. einer zweiten Anregungs-Modulationsfrequenz ($f_2$) und Erfassen eines zweiten gealterten Phasenmesswerts ($\phi(f_2,t)$) mit dem Detektor (7),
   iii. einer dritten Anregungs-Modulationsfrequenz ($f_3$) und Erfassen mindestens eines dritten gealterten Phasenmesswerts ($\phi(f_3,t)$) mit dem Detektor (7); und

   c. Berechnen einer alterungskompensierten Quencher-Konzentration mittels eines Systems von Stern-Volmer Gleichungen unter Berücksichtigung eines frequenz- und alterungsabhängigen Phasenbasiswerts ($\phi_0(f_i,t)$) und einer frequenz- und alterungsabhängigen Stern-Volmer-Konstante ($K_{SV}(f_i,t)$), sowie des ersten, zweiten und dritten gealterten Phasenmesswerts ($\phi(f_i,t)$), wobei der gealterte Phasenbasiswert ($\phi_0(f_i,t)$) eine Funktion des Phasenbasiswerts ($\phi_0(f_i,t_0)$) eines neuwertigen Sensors und eines frequenzabhängigen Alterungsparameters ($A$) ist.

2. Messverfahren nach Anspruch 1, **dadurch gekennzeichnet, dass** die gealterte Stern-Volmer Konstante ($K_{SV}(f_i,t)$) eine Funktion der Stern-Volmer Konstante ($K_{SV}(f_i,t_0)$) eines neuwertigen Sensors und eines weiteren frequenzabhängigen Alterungsparameters ($B$) ist.

3. Messverfahren nach einem der Ansprüche 1 oder 2, **dadurch gekennzeichnet, dass** der frequenzabhängige Alterungsparameter ($A$) und/oder der weitere frequenzabhängige Alterungsparameter ($B$) empirisch für einen einzelnen Sensor und/oder für Sensoren eines Sensortyps bestimmt wird, wobei der frequenzabhängige Alterungsparameter ($A$) und/oder der frequenzabhängige weitere Alterungsparameter ($B$) abhängig von der verwendeten Anregungs-Modulationsfrequenz ($f_i$) ist.

4. Messverfahren nach Anspruch 3, **dadurch gekennzeichnet, dass** der frequenzabhängige Alterungsparameter ($A$) und/oder der weitere frequenzabhängige Alterungsparameter ($B$) eines Sensortyps als Mittelwert über mehrere Sensoren dieses Sensortyps ermittelt werden.

**5.** Messverfahren nach einem der Ansprüche 1 bis 4, **dadurch gekennzeichnet, dass** die erste, zweite und/oder dritte Anregungs-Modulationsfrequenz ($f_i$) unterschiedlich sind, so dass bei der ersten, zweiten und/oder dritten Anregungs-Modulationsfrequenz ($f_i$) voneinander abweichende Alterungseffekte bestimmt werden.

**6.** Messverfahren nach einem der Ansprüche 1 bis 5, **dadurch gekennzeichnet, dass** die Steuer- und/oder Kontrolleinheit zumindest ein Erfassungsmodul, ein Berechnungsmodul und ein Speichermodul umfasst.

**7.** Messverfahren nach einem der Ansprüche 1 bis 6, **dadurch gekennzeichnet, dass** als alterungsbedingte Quencher-Konzentration eine Sauerstoff- oder Kohlendioxid-Konzentration im Messmedium ermittelt wird.

**Claims**

**1.** A measuring method for an optochemical sensor (1), which optochemical sensor (1) comprises a radiation source (6), which can emit radiation with at least two excitation modulation frequencies ($v_i$), a detector (7), a control and/or monitoring unit (9) and a sensitive element (2, 202, 302) with a fluorescence dye (4, 204, 304);
wherein the method comprises the following steps:

a. bringing the sensitive element (2, 202, 302) into contact with a measuring medium which contains a quencher;
b. exciting the sensitive element (2, 202, 302) with radiation emitted by the radiation source (6)

i. with a first excitation modulation frequency ($f_1$) and detecting of a first aged phase measurement value ($\phi(f_1,t)$) with the detector (7),
ii. with a second excitation modulation frequency ($f_2$) and detecting of a second aged phase measurement value($\phi(f_2,t)$) with the detector (7),
iii. with a third excitation modulation frequency ($f_3$) and detecting of at least a third aged phase measurement value ($\phi(f_3,t)$) with the detector (7); and

c. calculation of an ageing-compensated quencher concentration by means of a system of Stern-Volmer equations, taking account of a frequency-dependent and ageing-dependent phase base value ($\phi_0(f_i,t)$) and a frequency-dependent and ageing-dependent Stern-Volmer constant ($K_{SV}(f_i,t)$) and also of the first, second and third aged phase measurement value ($\phi(f_i,t)$), wherein the aged phase base value ($\phi_0(f_i,t)$) is a function of the phase base value ($\phi_0(f_i,t_0)$) of an unused sensor and a frequency-dependent ageing parameter ($A$).

**2.** The measuring method according to claim 1, **characterized in that** the aged Stern-Volmer constant ($K_{SV}(f_i,t)$) is a function of the Stern-Volmer constant ($K_{SV}(f_i,t_0)$) of an unused sensor and a further frequency-dependent ageing parameter ($B$).

**3.** The measuring method according to one of claims 1 or 2, **characterized in that** the frequency-dependent ageing parameter ($A$) and/or the further frequency-dependent ageing parameter ($B$) is empirically determined for a single sensor and/or for sensors of a sensor type, wherein the frequency-dependent ageing parameter ($A$) and/or the frequency-dependent further ageing parameter ($B$) is dependent on the excitation modulation frequency ($f_i$) used.

**4.** The measuring method according to claim 3, **characterized in that** the frequency-dependent ageing parameter ($A$) and/or the further frequency-dependent ageing parameter ($B$) of a sensor type is determined as an average over a plurality of sensors of this sensor type.

**5.** The measuring method according to one of claims 1 to 4, **characterized in that** the first, second and/or third excitation modulation frequency ($f_i$) are different, so that differing ageing effects are determined with the first, second and/or third excitation modulation frequency ($f_i$).

**6.** The measuring method according to one of claims 1 to 5, **characterized in that** the control and/or monitoring unit comprises at least one detecting module, a calculation module and a storage module.

**7.** The measuring method according to one of claims 1 to 6, **characterized in that** an oxygen or carbon dioxide concentration is determined in the measuring medium as the ageing-dependent quencher concentration.

**Revendications**

1. Procédé de mesure pour un capteur optochimique (1), ledit capteur optochimique (1) comportant une source de rayonnement (6) capable d'émettre un rayonnement avec au moins deux fréquences de modulation d'excitation ($v_i$), un détecteur (7), une unité de commande et/ou de contrôle (9) et un élément sensitif (2, 202, 302) avec un colorant fluorescent (4, 204, 304) ;

   dans lequel le procédé comprend les étapes suivantes :

   a. mise en contact de l'élément sensitif (2, 202, 302) avec un fluide de mesure contenant un désactivateur ;
   b. excitation de l'élément sensitif (2, 202, 302) par un rayonnement émis par la source de rayonnement,

   i. à une première fréquence de modulation d'excitation ($f_1$), et détection d'une première valeur de mesure de phase vieillie ($\phi(f_1,t)$) avec le détecteur (7),
   ii. à une deuxième fréquence de modulation d'excitation ($f_2$), et détection d'une deuxième valeur de mesure de phase vieillie ($\phi(f_2,t)$) avec le détecteur (7),
   iii. à une troisième fréquence de modulation d'excitation ($f_3$), et détection d'au moins une troisième valeur de mesure de phase vieillie ($\phi(f_3,t)$) avec le détecteur (7) ; et

   c. calcul d'une concentration en désactivateur avec compensation de vieillissement, au moyen d'un système d'équation de Stern-Volmer, en tenant compte d'une valeur de base de phase dépendante de la fréquence et du vieillissement ($\phi_0(f_i,t)$) et d'une constante de Stern-Volmer dépendante de la fréquence et du vieillissement ($K_{SV}(f_i,t)$), ainsi que de la première, de la deuxième et de la troisième valeur de mesure de phase vieillie ($\phi(f_i,t)$), dans lequel la valeur de mesure de phase vieillie ($\phi_0(f_i,t)$) est une fonction de la valeur de base de phase ($\phi_0(f_i,t)$) d'un capteur à l'état neuf et d'un paramètre de vieillissement dépendant de la fréquence ($A$).

2. Procédé de mesure selon la revendication 1, **caractérisé en ce que** la constante de Stern-Volmer vieillie ($K_{SV}(f_i,t)$) est une fonction de la constante de Stern-Volmer ($K_{SV}(f_i,t_0)$) d'un capteur à l'état neuf et d'un autre paramètre de vieillissement dépendant de la fréquence ($B$).

3. Procédé de mesure selon l'une des revendications 1 ou 2, **caractérisé en ce que** le paramètre de vieillissement dépendant de la fréquence ($A$) et/ou l'autre paramètre de vieillissement dépendant de la fréquence ($B$) sont déterminés empiriquement pour un capteur individuel et/ou pour des capteurs d'un type de capteur, dans lequel le paramètre de vieillissement dépendant de la fréquence ($A$) et/ou l'autre paramètre de vieillissement dépendant de la fréquence ($B$) dépendent de la fréquence de modulation d'excitation ($f_i$) utilisée.

4. Procédé de mesure selon la revendication 3, **caractérisé en ce que** le paramètre de vieillissement dépendant de la fréquence ($A$) et/ou l'autre paramètre de vieillissement dépendant de la fréquence ($B$) d'un type de capteur sont déterminés comme valeur moyenne de plusieurs capteurs de ce type de capteur.

5. Procédé de mesure selon l'une des revendications 1 à 4, **caractérisé en ce que** la première, la deuxième et/ou la troisième fréquence de modulation d'excitation ($f_i$) sont différentes, de sorte que des effets de vieillissement différents les uns des autres sont déterminés pour la première, la deuxième et/ou la troisième fréquence de modulation d'excitation ($f_i$).

6. Procédé de mesure selon l'une des revendications 1 à 5, **caractérisé en ce que** l'unité de commande et/ou de contrôle comprend au moins un module de détection, un module de calcul et un module de mémoire.

7. Procédé de mesure selon l'une des revendications 1 à 6, **caractérisé en ce qu'**une concentration en oxygène ou en dioxyde de carbone dans le fluide de mesure est déterminée en tant que concentration en désactivateur dépendante du vieillissement.

## Fig. 1

## Fig. 2

## Fig. 3

## Fig. 4

9

1

5

7

3

6

11

8

2

4

**Fig. 5**

6

204

202

7

210

5

**Fig. 6**

6

310

302

7

304

5

**Fig. 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008148703 A
- US 20100032583 A1